# EUROPEAN PATENT APPLICATION

(11) **EP 0 926 852 A2**
(43) Date of publication of application: **30.06.1999**
(21) Application number: 98440294.1
(22) Date of filing: 18.12.1998
(51) Int. Cl.: H04J 3/14

(54) **Method and device for transmitting an alarm signal for the protection of connections in mixed synchronous (SDH) - and plesiochronous (PDH ) - type networks**

(30) Priority: 23.12.1997 IT MI972850
(71) Applicant: ALCATEL, 75008 Paris (FR)
(72) Inventor: Coltro, Claudio, 20060 Cassina de Pecchi (MI) (IT)
(74) Representative: Schätzle, Albin, Dipl.-Phys.

(57) **Abstract**

A method for transmitting an alarm signal for the protection of connections in mixed synchronous (SDH) and plesiochronous (PDH) networks based on a client signal failure (CSF) arrangement which transfers alarm indications from the PDH client transport layer to the SDH server transport layer, in order to allow to carry out the complete protection for connections in networks and subnetworks SNC-P within said mixed networks.

## Description

The present invention relates to a method and device for transmitting an alarm signal for the protection of the connections in mixed networks comprising synchronous-type (SDH) subnetworks and plesiochronous-type (PDH) subnetworks, said connections in mixed networks, comprising both client and server synchronous-type (SDH) layers and plesiochronous-type (PDH) layers.

Transmission through completely synchronous (SDH) networks is based upon the assumption that there is a complete continuity of connection between the various network termination points assuring the propagation of frames provided with all their traffic (payload), envelope and timing (overhead) components.

In the case of mixed networks comprised of Synchronous Digital Hierarchy, SHD, and Plesiochronous Digital Hierarchy, PDH subnetworks, said complete continuity is not possible, because PDH subnetworks transfer only payload traffic bits and not envelope and timing components.

This constitutes an inconvenience when complete protection of networks and subnetworks (SNC-P) during transit through mixed networks should be realized, because normal alarm and protection signals also involve envelope and timing components of the SDH frames which are not transferred through the PDH subnetworks.

Hence, it is not possible to activate complete protection from any terminal point to another one within the network.

Particularly, in the cases of mixed networks, only unidirectional failures originating AU/TU-AIS or AU/TU-LOP signals in the terminal protection switches are protected. All other failures occurring in SDH and PDH subnetworks which do not include protection switches, are unprotected.

No solutions to the problem of activating complete end-to-end protection in mixed SDH - PDH networks are known in the art.

The present invention, therefore, seeks to provide a solution to the application of the connection protection in networks and subnetworks (SNC-P) during transit within mixed SDH and PDH networks.

Therefore, the object of the present invention is to overcome the above mentioned drawbacks and to indicate a method and device for transmitting an alarm signal for the protection of the connections in mixed networks of both the synchronous (SDH) and plesiochronous (PDH) type, based on the realization of a mechanism, which in the following is designed CSF (Client Signal Failure), which transfers the alarm indications from the PDH client transport layer to the SDH server transport layer in order to allow to carry out the complete protection of connections of networks and subnetworks (SNC-P) in said mixed networks.

To achieve these objectives, the present invention provides a method and device for transmitting an alarm signal for the protection of connections in mixed synchronous, SDH, and plesiochronous, PDH, networks, as better described in the claims that form integral part of the present description.

The method provided by the invention has the basic advantage of allowing the protection of connections in networks and subnetworks (SNC-P) during transit within mixed SDH and PDH networks particularly, though not exclusively, for:
- end-to-end protection for submarine/terrestrial long distance systems running through countries without SDH infrastructures;
- protection for mixed access/transport networks using different technologies;
- protection interworking with low capability radio systems working with n x 2 Mbit/s PDH streams;
- SDH networks interconnected with PDH intra-station links, especially for low capacity interconnections.

Further objects and advantages of the present invention shall result in being clear from the following detailed description of an embodiment thereof and from the accompanying drawings given purely by way of example and not as a limitation, where:
- Fig.1 shows a schematic block diagram which realizes the protection - function for connections in known SDH networks;
- Fig.2 shows a schematic block diagram which realizes the protection function for connections between PDH subnetworks and SDH subnetworks in accordance with the present invention.

The functional model defined by ETSI (European Telecommunications Standard Institute) recommendations for SDH networks is based on the well known ISO standard for layered client-server architectures (in the following called "layers").

This model allows the alarm and protection signals such as e.g. "server signal fail" (SSF) or the "trail signal fail" (TSF) to flow from server layers to client layers, or the alarm and protection signals such as e.g. "Alarm Indication Signal" (AIS) to flow from the client layers to the server layers, as described for example in ITU-T recommendation G.841 which describes how the protection mechanisms operate in the SDH networks for the detection of said alarm signals.

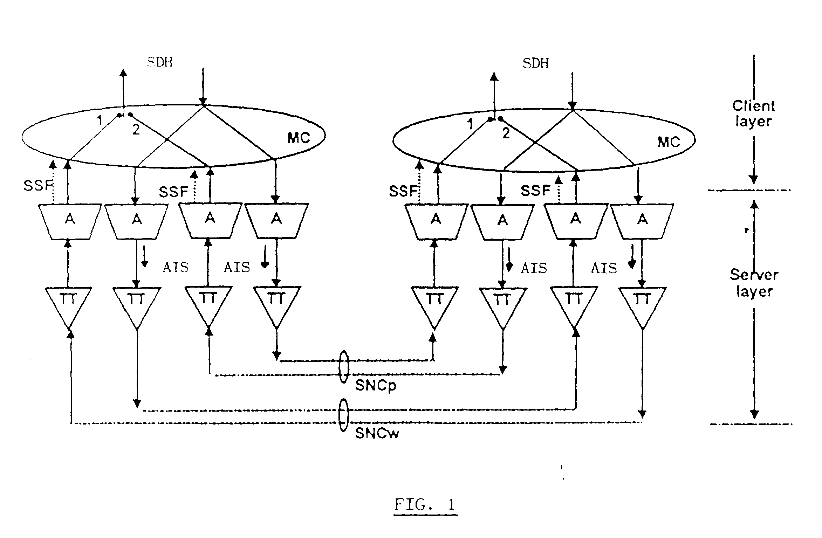

With reference to Fig. 1 there is shown therein a schematic block diagram which realizes the protection function for connections of known SDH subnetworks in which also the SSF, TSF or AIS alarm signals propagate.

MC indicates known connection matrices; A indicates known adaptation functions of the formats in passing through the various layers; TT indicates known termination functions. Their formation and operation are described in the above mentioned ITU-T recommendation G.841, well known to a person skilled in the art.

Bidirectional connections between SDH subnetworks protected by protection (SNCp) and working (traffic) (SNCw) connections, the termination functions (TT) and the adaptation functions (A) belonging to the server layer and the connection matrices (MC) belonging to the client layer, are established.

In the connection matrices MC there are further protection switches (designed as 1 - 2 in figure), which in the case of failures, switch between working connections (SNCw) and protection connections (SNCp).

As it is known for example, from ITU-T recommendation G.707, the SDH frames, which are formed and transit in structures as shown in Fig.1, consist of multilevel synchronous multiplex nested structures, the fundamental components of which are called Synchronous Transport Modules (STM) at level N or STM-N (N = 1, ....) indicating the bit rate (for example STM-1 155 Mbit/s, STM-16 2488 Mbit/s).

Each STM-N module is composed of one header part called "Section Overhead" (SOH), containing auxiliary administrative and timing information and a subsequent part called "information payload" containing the information part, organized in one or more so called "Administrative Units" (AU-n).

The latter is in turn composed of one header part called "AU pointer" and various hierarchies of so called "Tributary Units" (TU), composed of their own overhead called "TU pointer" and "Virtual Containers" (VC) of various hierarchical order (basic order VC-11, 12, 21, 22 or higher order VC-31, 32, ...): the latter are in turn composed of a heading called "Path Overhead" (POH) and a part containing the actual information or paytraffic called "payload".

The "Alarm Indication Signal" (AIS) is a signal of the "all-ONEs" type, which is generated by the adaptation functions A to replace the normal traffic signal when a failure condition is present in a determined point of the SDH frame. The signal AIS is inserted at the point where it was originated and propagates in the client to server direction. For example, there are the following types of AIS signal:
MS-AIS: Multiplex Section AIS, is an "all-ONEs" in the entire transport module STM-N, exception made for the field RSOH of the "section overhead" part;
AU-AIS: Administrative Unit AIS, is an "all-ONEs" in the entire TU-n, including the TU-n pointer;
TU-AIS: Tributary Unit AIS, is an "all-ONEs" in the entire TU-n, including the TU-n pointer;
VC-AIS: an AU/TU-AIS which reaches a known tandem type connection and is transferred into an AIS virtual container (VC-AIS) within the Tandem connection; hence, a VC-n AIS signal is an "all-ONEs" in the whole VC-n.

The "server signal fail", SSF, and "trail signal fail", TSF, signals are inserted and distributed within the SDH frame structure between the client and server layers through the adaptation functions A.

The SSF signal informs on the "signal fail" condition of the associated data signal which contains the "all-ONEs" AIS pattern due to that signal fail condition. Signal SSF, when transferred to a connection function, represents the SF signal failure condition which could trigger a switchover of the above mentioned protection switches.

In the case of mixed SDH and PDH networks, said alarm and protection signals (TSF, SSF) are not transferred across the PDH subnetworks, because they contain the envelope and timing component of the SDH frames.

Some non limiting examples of failure or alarm anomalous situations for which complete connection protection in networks and subnetworks (SNC-P) would be desirable are:

PDH AIS: this is a fault which indicates that a failure has occurred in a PDH subnetwork non adjacent to a NE SDH network element, or in an SDH subnetwork.

PDH LOS: this is a fault which indicates a network failure in both intra-office and inter-office PDH link adjacent to a NE SDH network element. For example intra-office connections of NE SDH network elements through PDH interfaces are often used by network operators.

PDH LOF: this is an alarm which is effective for protection against frame alignment problems in apparatuses at the client layer level.

PDH EXBER: this is an alarm which is effective for protection against signal degradations.

To solve the problem, the basic idea is to provide a client signal failure (CSF) mechanism which transfers the alarm indications from the PDH client transport layer to the SDH server transport layer in order to allow complete protection of network and subnetwork connections SNC-P in mixed SDH/PDH networks when the subnetwork is a PDH one.

Once said alarm conditions have been detected by the SDH NE network elements, in order to activate the protection for network connections, they must be reported to the protection switches using a signal which they are able to understand, mainly a so-called client signal fail (CSF), normally of the AU/TU-AIS type defined above.

In the presence of a SSF signal generated by adaptation functions in the client layer to server layer direction, or when a failure occurs in the PDH subnetwork, the adaptation functions generate a CSF signal, for example of the SSF type. This signal in turn determines the generation of an alarm signal of the AU/TU-AIS type, consisting of an "all-ONEs" condition in the whole virtual container (including the POH field) which must transport the PDH payload during transit from the PDH frame to the SDH frame.

To insert the PDH payload into a SDH VC, a certain number of stuffing bits are added to the PDH payload which serve to recover the timing between the SDH and PDH frames, generating a "synchronous payload envelope" which constitutes the SDH payload to which the heading OH must be added.

The CSF signal at the PDH input port results in an SSF type signal at the selection input which activates the protection switch.

Hence, the proposed arrangement is based on a combination of switchovers generated by SSF type signals for failures occurring in SDH subnetworks containing protection switches, and of CSF type indications which propagate from damaged PDH subnetworks to SDH subnetworks.

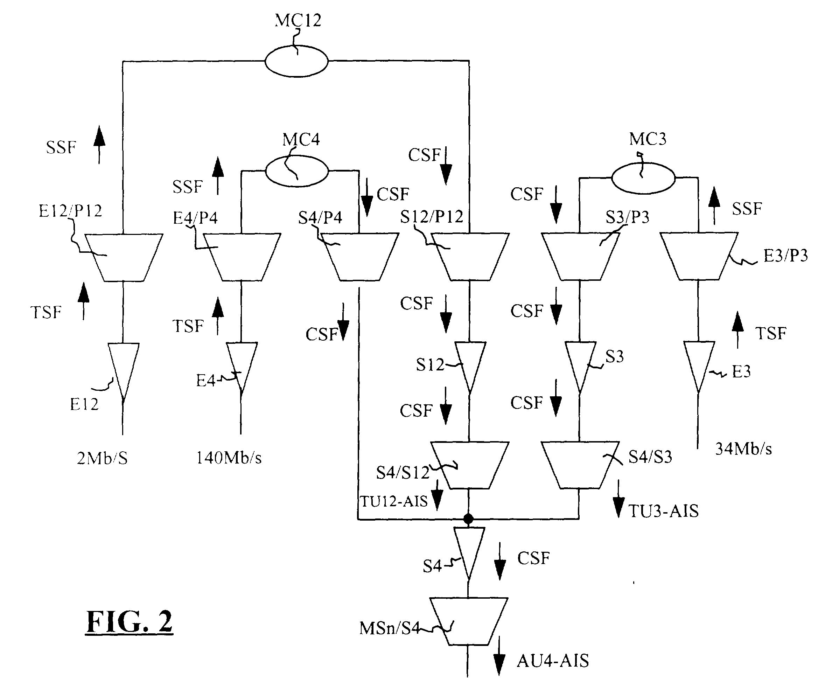

Fig. 2 shows how CSF signals are generated and propagate at the interface between SDH subnetworks and a PDH subnetwork. The adopted symbols comply with those used in the respective standards.

E12/P12, E4/P4, S4/P4, S12/P12, S3/P3, E3/P3, S4/S12, S4/S3 and MSn/S4 indicate known adaptation functions, while E12, E4, S12, S3, E3 and S4 indicate known termination functions and MC12, MC4 and MC3 indicate known switching matrix functions.

Let us assume that the 2 Mbit/s, 140 Mbit/s and 34 Mbit/s PDH signals (frames) are present at the terminations E12, E4 and E3, respectively.

When an alarm signal (SSF type) is present at the inputs, the adaptation functions S4/P4, S12/P12 and S3/P3 generate a CSF signal. The CSF signal is of a nature similar to SSF.

Consequently, the adaptation functions S4/S12, S4/S3 and MSn/S4 generate the alarm indications TU-12-AIS, TU-3-AIS and AU4-AIS.

The adaptation functions S4/P4, S12/P12 and S3/P3 therefore include a supplementary function for detection of an "all-ONEs" condition in the payload generated by the CSF signal, and to generate an "all-ONEs" signal type at the outputs. In addition, the adaptation functions S4/S12, S4/S3 and MSn/S4 include a supplementary function for detection of an "all-ONEs" condition at their inputs, provided by the CSF signal, and consequently to generate the alarm indications TU-12-AIS, TU-3-AIS and AU4-AIS.

The foregoing is believed sufficient for those skilled in the art to understand the invention. Modifications and variations will be readily apparent in light of this disclosure. The actual scope, however, is defined by the following claims.

## Claims

1. Method of transmitting alarm signals for the protection of connections in mixed networks comprising synchronous (SDH) subnetworks provided with frames and plesiochronous (PDH) subnetworks, said connections in mixed networks comprising client layers and server layers both of synchronous (SDH) and plesiochronous (PDH) types, characterized in that it comprises the step of transferring alarm indications (CSF) from a plesiochronous (PDH) client layer to a synchronous (SDH) server layer, said alarm indications (CSF) being inserted in the frames of said synchronous (SDH) subnetworks, allowing to carry out a complete network and subnetwork (SNC-P) connection protection in said mixed networks.

2. Method according to claim 1, characterized in that said alarm indications (CSF) are embedded in the frames of said synchronous type (SDH) subnetworks by means of adaptation functions (S4/P4, S12/P12, S3/P3) so as to allow the generation of alarm signals of the "Alarm Indication Signal (AIS)" type.

3. Method according to claim 2, characterized in that said alarm indications (CSF) consist of an "all-ONEs" condition in a portion of the SDH frame corresponding to a whole Virtual Container.

4. Device for implementing the method according to any of claims 1 to 3, characterized in that it comprises means for recognizing said transfer of alarm indications (CSF) from a plesiochronous client layer (PDH) to a synchronous server layer (SDH) and for generating said alarm signals of the "Alarm Indication Signal (AIS)" type.

5. Device according to claim 4, characterized in that said means for recognizing said transfer of alarm indications (CSF) are comprised in adaptation functions and generate an "all-ONEs" condition in a portion of the synchronous SDH frame corresponding to an entire Virtual Container.
